# EUROPÄISCHE PATENTANMELDUNG

(11) **EP 2 759 444 A1**
(43) Veröffentlichungstag der Anmeldung: **30.07.2014**
(21) Anmeldenummer: 13199269.5
(22) Anmeldetag: 23.12.2013
(51) Int. Cl.: B60P 7/08, B62D 33/04

(54) **Nutzfahrzeug mit einer Halterung für ein Ladungssicherungselement**

(30) Priorität: 23.01.2013 DE 202013100309 U
(71) Anmelder: System Trailers Fahrzeugbau GmbH, 49767 Twist (DE)
(72) Erfinder: Saatkamp, Ralf, 49767 Twist (DE)
(74) Vertreter: Habbel, Ludwig

(57) **Zusammenfassung**

Die Erfindung betrifft ein Nutzfahrzeug, mit einem die Nutzlast aufnehmenden Laderaum, in Längs- oder Fahrtrichtung des Nutzfahrzeugs verlaufenden Dachholmen (1), welche jeweils in dem Bereich verlaufen, in welchem ein Dach an eine Seitenwand des Laderaums angrenzt, und mit einem an einem Dachholm gehaltenen Beschlag (7) zur Halterung eines Ladungssicherungs-Elements (21) , wobei am Dachholm eine Führungsschiene vorgesehen ist, die in Längsrichtung des Dachholms verläuft, der Beschlag an der Führungsschiene (5) längsbeweglich geführt ist an beiden parallelen Dachholmen jeweils ein Beschlag vorgesehen ist, beide Beschläge durch einen Mitnehmer miteinander verbunden sind, derart, dass eine Längsbewegung eines Beschlags mittels des Mitnehmers auf den anderen Beschlag übertragen wird und beide Beschläge gemeinsam beweglich sind, wobei das an dem Beschlag jeweils gehaltene Element als dehnbares Zwischenelement ausgestaltet ist, an dem das Ladungssicherungs-Element geführt ist, die Fahrzeugstruktur eine Mehrzahl von Verankerungspunkten aufweist, von denen an jeweils zweien das Ladungssicherungs-Element derart verankerbar ist, dass vom Ladungssicherungs-Element aufgenommene Kräfte über die Verankerungspunkte in die Fahrzeugstruktur eingeleitet werden, und das Ladungssicherungs-Element lösbar an den Verankerungspunkten festgelegt ist.

## Beschreibung

Die Erfindung betrifft ein Nutzfahrzeug.

Aus der DE 39 29 425 A1 ist ein Fahrzeugaufbau eines Nutzfahrzeugs bekannt, bei dem am Dachholm Beschläge längsverschiebbar gelagert sind, welche Rungen halten. Die Seitenwand ist als Plane ausgestaltet und kann in Längsrichtung des Fahrzeugs gefaltet werden, um einen seitlichen Zugang zum Laderaum zu ermöglichen. Damit die Rungen dann nicht hinderlich im Wege sind, können sie verschoben werden.

Die beweglichen Rungen werden im Rahmen des vorliegenden Vorschlags nicht als Elemente der Ladungssicherung angesehen, da sie nicht dazu vorgesehen und konstruktiv nicht dafür ausgelegt sind, die Ladung auf der Ladefläche in einer bestimmten Stellung zu fixieren. Sie stellen vielmehr eine Verstärkung der Außenwand des Laderaums dar. Sollte eine Ladung zu kippen oder zu rutschen beginnen, wird sie durch die Rungen nicht daran gehindert. Wenn die Ladung auf die Rungen trifft, hängt es von der Ausgestaltung der Rungen sowie von dem Gewicht und der Bewegungsgeschwindigkeit der Ladung ab, ob die Rungen durchbrochen werden oder nicht. Im Unterschied dazu dient die im Rahmen des vorliegenden Vorschlags so bezeichnete Ladungssicherung dazu, die Ladung auf der Ladefläche zu fixieren und an einer Bewegung zu hindern.

Die Beweglichkeit der Rungen dient dazu, einen seitlichen Zugang zum Laderaum zu ermöglichen, wenn die als Plane ausgestaltete und mittels der Rungen verstärkte Seitenwand des Laderaums aufgeschoben wird. Die dann an der Seite des Laderaums frei gewordene Fläche soll nicht durch eine Vielzahl ortsfester Rungen verstellt sein. Nur wenige Rungen sind ortsfest vorgesehen, um das Dach des Nutzfahrzeugs zu stützen, und die beweglichen Rungen ermöglichen einen großflächigen seitlichen Zugang zum Laderaum, indem sie dorthin verschoben werden können, wo sich auch die zusammengefaltete Plane befindet. Bei geschlossener Seitenwand befinden sich sämtliche Rungen an fest vorgegebenen Positionen, so dass im Fahrbetrieb des Nutzfahrzeugs die Dachkonstruktion gleichmäßig und an vielen Stellen gestützt ist.

Zur Ladungssicherung werden Spanngurte verwendet, die quer zur Fahrtrichtung bzw. Längsrichtung des Nutzfahrzeuges verlaufen. Die beiden Enden des Spanngurtes sind am Ladeboden oder am Rahmen des Nutzfahrzeugs festlegbar, beispielsweise an dafür vorgesehenen Zurrösen, und durch Verkürzung seiner wirksamen Länge kann mittels des Spanngurts ein auf den Boden des Laderaums stehendes Transportgut so fest auf den Boden gepresst werden, dass dieses Transportgut gegen ungewollte Bewegungen im Laderaum gesichert ist.

Um die Handhabung der Spanngurte zu vereinfachen, können diese aus einer Bereitschaftsstellung in ihre Gebrauchsstellung verbracht werden. In der Bereitschaftsstellung werden die Spanngurte lösbar an Beschlägen gehalten, die an den Dachholmen des Nutzfahrzeugs befestigt sind. Dabei verlaufen die Spanngurte von der einen Fahrzeugseite über die Höhe des Laderaums vom Ladeboden bis zum Dachholm, wo sie an einem der erwähnten Beschläge gehalten sind, verlaufen weiter von diesem Beschlag unter dem Dach quer zum gegenüberliegenden Dachholm, wo sie an einem zweiten Beschlag nach unten umgelenkt sind und beispielsweise bis zum Boden verlaufen. Wird ein solcher Spanngurt benötigt, so können die Umlenkelemente, um welche die Spanngurte verlaufen, von den Beschlägen gelöst werden. Beispielsweise indem durch einen Zug am Spanngurt eine magnetische Haltekraft überwunden wird. Der als Ladungssicherungselement benötigte Spanngurt kann auf diese Weise vom Beschlag entfernt werden und dem zu sichernden Ladegut möglichst eng anliegend gespannt werden, so dass er nun seine Gebrauchsstellung einnimmt. Der Spanngurt bleibt derweil mittels eines elastischen Bandes mit den Beschlägen verbunden und kann später, wenn er wieder vom Ladegut gelöst wird, durch die Rückstellkräfte des Bandes zum Beschlag in seine Bereitschaftsstellung zurückgeführt werden.

Aus der DE 600 22 604 T2 ist ein System zur Befestigung von Gegenständen im Inneren eines Kraftfahrzeugs sowie gleitende Ankerelemente hierfür bekannt, also ein Ladungssicherungssystem. Das Fahrzeug soll insbesondere, aber nicht ausschließlich, ein Nutzfahrzeug sein. Die Ankerelemente sind Beschläge, welche in einer Schiene oberhalb der Ladefläche beweglich geführt sind, zur Führung von Spanngurten dienen, und die vom Spanngurt auf den Beschlag wirkende Kraft in die Schiene einleiten. Dies betrifft einerseits die Spannkräfte, wenn der Gurt zwischen zwei Ankerstellen gespannt wird, und andererseits die Kräfte, welche aufgrund der Massenträgheit von der Ladung auf die Spanngurte einwirken, beispielsweise bei Kurvenfahrt oder Bremsvorgängen.

Die Schienen müssen dementsprechend als strukturelle Elemente ausgestaltet sein, so dass sie die einwirkenden Kräfte in die Fahrzeugstruktur einleiten können. Daher sind Mittel zum Blockieren vorgesehen, welche wahlweise ein Verschieben des Beschlags entlang der Schiene ermöglichen, oder welche wahlweise den Beschlag an der Schiene in der zuvor bestimmten Stellung festlegen. Übertragen auf die Abmessungen eines LKWs oder LKW-Anhängers, insbesondere dessen Länge und die dementsprechende Spannweite eines Dachholms, erfordert dieser Vorschlag eine sehr massive, nämlich sehr biegesteife Ausgestaltung des Dachholms, was erstens wirtschaftlich nachteilig ist und zweitens durch ein stark erhöhtes Gewicht des Dachholms die zulässige Nutzlast verringert.

Aus der DE 197 22 501 A1 ist eine Vorrichtung zur Ladegutsicherung an einem Fahrzeug bekannt, bei welcher ein Verzurrelement entlang einer bogenförmig oder abgewinkelt verlaufenden Führungskulisse geführt ist. Nach vorne hin befindet sich die Führungskulisse wenigstens so hoch, wie es der maximalen Ladeguthöhe entspricht, und nach hinten hin verläuft die Führungskulisse bis auf den Ladeflächenbereich hinunter. Ein Verzurrelement wie z. B. ein Gurt oder ein Netz ist mit einem ersten Ende nahe der Ladefläche, unter dem vorderen Ende der Führungskulisse befestigt, und mit einem zweiten Ende in der Führungskulisse geführt. Nach Beladung des Fahrzeugs wird das zweite Ende des Verzurrelements von vorn nach hinten entlang der Führungskulisse bewegt, so dass es sich automatisch über die Ladung legt und diese sichert.

Wie die Schienen des vorgenannten Standes der Technik muss auch die Führungskulisse als strukturelles Element ausgestaltet sein, so dass sie die einwirkenden Kräfte in die Fahrzeugstruktur einleiten kann. Daher sind Mittel zum Blockieren vorgesehen, welche wahlweise ein Verschieben des Beschlags entlang der Schiene ermöglichen, oder welche wahlweise den Beschlag an der Schiene in der zuvor bestimmten Stellung festlegen. Übertragen auf die Abmessungen eines LKWs oder LKW-Anhängers, insbesondere dessen Länge und die dementsprechende Spannweite eines Dachholms, ergibt dieser Vorschlag daher die selben Einschränkungen hinsichtlich der Wirtschaftlichkeit und der Nutzlast. Es sind daher in der genannten Druckschrift ausdrücklich Kompaktfahrzeuge, Kombifahrzeuge, Caravans oder Transporter als Fahrzeugtypen erwähnt, für die dieser Vorschlag als geeignet angesehen wird.

Der Erfindung liegt die Aufgabe zugrunde, ein gattungsgemäßes Nutzfahrzeug dahingehend zu verbessern, dass dieses eine möglichst optimale Sicherung nahezu beliebig dimensionierter Ladegüter und eine einfache Handhabung eines dazu verwendeten Ladungssicherungs-Elements ermöglicht.

Diese Aufgabe wird durch ein Nutzfahrzeug mit den Merkmalen des Anspruchs 1 sowie durch einen Dachholm nach Anspruch 8, eine Führungsschiene nach Anspruch 9 und einem Beschlag nach Anspruch 10 gelöst.

Die Erfindung schlägt mit anderen Worten vor, die Beschläge längsbeweglich an den Dachholmen anzuordnen, im Unterschied zu den bekannten, als Spanngurte ausgestalteten Ladungssicherungs-Elementen, die sich nur an fest vorgegebenen Stellen befinden, nämlich dort, wo Beschläge ortsfest an den Dachholmen vorgesehen sind. Vorschlagsgemäß können die Beschläge entlang dem Dachholm dorthin verschoben werden, wo der Spanngurt optimal um das betreffende Ladegut geführt werden kann. Zudem können beispielsweise mehrere Spanngurte zur Sicherung eines einzigen, beispielsweise besonders schweren Ladegutes genutzt werden, indem die entsprechend gewünschte Anzahl von Spanngurten dorthin entlang den Dachholmen mitsamt der Beschläge verschoben wird, wo sich dieses zu sichernde Ladegut befindet.

Dabei ist das an dem Beschlag jeweils gehaltene Element als dehnbares Zwischenelement ausgestaltet, an dem das Ladungssicherungs-Element geführt ist. Die Dehnbarkeit kann entweder unmittelbar durch das verwendete Material des Zwischenelements erreicht werden, z. B. wenn dieses ähnlich wie ein Gummiband längenveränderlich ist, oder sie kann durch die konstruktive Ausgestaltung des Zwischenelements erreicht werden, z. B. wenn dieses ähnlich wie ein Sicherheitsgurt eines Fahrzeugs gegen eine Federwirkung von einer Rolle abziehbar ist.

Dadurch, dass das Zwischenelement dehnbar ist, werden keine nennenswerten Kräfte über den Beschlag in den Dachholm eingeleitet, wenn das Ladungssicherungs-Element gespannt wird oder die Masse der Ladung auf das Ladungssicherungs-Element einwirkt. Lediglich die Dehnkräfte des Zwischenelements werden in den Dachholm eingeleitet, nicht jedoch die erheblich größeren Spannkräfte, mit denen das Ladungssicherungs-Element an seinen Verankerungspunkten gesichert wird, um ein Stück der Ladung festzulegen.

Das am Beschlag gehaltene Zwischenelement dient lediglich dazu, ein entlastetes Ladungssicherungs-Element entlang des Laderaums verschieben und optimal positionieren zu können. Dabei ist die Handhabung des Ladungssicherungs-Elements stark vereinfacht: ein beispielsweise als Ladungssicherungs-Element verwendeter Spanngurt muss nicht zusammengerafft und entlang des Laderaums an eine andere Stelle getragen werden, und dort dann über die Breite des Laderaums, nämlich über die Ladung hinweg, verlegt und an zwei Verankerungsstellen befestigt werden, beispielsweise an zwei Zurrösen. Vielmehr hängt der Spanngurt an dem Zwischenelement, und wenn der Spanngurt erfasst und in Längsrichtung des Nutzfahrzeugs geführt wird, folgt das mit dem Spanngurt verbundene Zwischenelement sowie der mit dem Zwischenelement verbundene Beschlag entlang dem Dachholm dieser Bewegung.

Vorschlagsgemäß ist an beiden parallelen Dachholmen jeweils gegenüberliegend ein Beschlag vorgesehen, wobei diese beiden einander gegenüberliegenden Beschläge durch einen Mitnehmer miteinander verbunden sind. Der beispielhaft erwähnte Spanngurt hängt mit seinen beiden Enden frei von diesen Beschlägen herab. Je nachdem, wie der Spanngurt an dem jeweiligen Beschlag gehalten wird, kann der Mitnehmer beispielsweise durch den Spanngurt selbst gebildet werden, alternativ können Stangen, Bänder oder dergleichen die Mitnehmer bilden. Auch das erwähnte Zwischenelement, welches beispielsweise als elastisches Band ausgestaltet sein kann, das einen Spanngurt mit einem Beschlag oder mit zwei gegenüberliegenden Beschlägen verbindet, kann den Mitnehmer bilden. Jedenfalls wird durch den Mitnehmer bewirkt, dass eine Längsbewegung des einen Beschlags mittels des Mitnehmers auf den zugehörigen anderen Beschlag übertragen wird, so dass beide Beschläge gemeinsam entlang den beiden Dachholmen bewegt werden, wenn auch nur einer dieser beiden Beschläge gehandhabt wird. So wird der komplette Spanngurt bei Handhabung lediglich eines Beschlags in Längsrichtung des Fahrzeugs bewegt und kann auf einfache Weise und in kurzer Zeit an der gewünschten Stelle positioniert werden, an welcher die Sicherung der Ladung optimal möglich ist.

Die Fahrzeugstruktur weist vorschlagsgemäß eine Mehrzahl von Verankerungspunkten auf, von denen an jeweils zweien das Ladungssicherungs-Element verankert werden kann. Wie die beispielhaft erwähnten Zurrösen ermöglichen diese Verankerungspunkte, dass vom Ladungssicherungs-Element aufgenommene Kräfte über die Verankerungspunkte in die Fahrzeugstruktur eingeleitet werden. Das dehnbare Zwischenelement wird beim Spannen des Ladungssicherungs-Elements zwar gedehnt, überträgt dabei jedoch keine nennenswerten Kräfte auf den Beschlag und in den Dachholm, ist also an der eigentlichen Ladungssicherung nicht beteiligt. Es dient lediglich dazu, das Ladungssicherungs-Element an dem Beschlag zuhalten und so die möglichst einfach handhabbare Beweglichkeit des Ladungssicherungs-Elements zu gewährleisten, wenn dieses in Längsrichtung des Nutzfahrzeugs verstellt werden soll. Eine derartige Verstellung kann erfolgen, um das Ladungssicherungs-Element jeweils optimal an die zu sichernde Ladung anzupassen und dafür optimal zu positionieren, oder um es aus dem Weg zu verschieben, wenn bei Ladevorgängen ein seitlicher Zugang zum Laderaum erwünscht ist.

Dadurch, dass das Ladungssicherungs-Element lösbar an den Verankerungspunkten festgelegt ist, kann es problemlos dort zur Sicherung der Ladung festgelegt werden, oder es kann von den Verankerungspunkten gelöst werden, damit es wie beschrieben aus dem Weg verschoben kann bzw. an anderen, für die jeweilige Ladung besser geeigneten Verankerungspunkten festgelegt werden kann.

Um die Beschläge längsbeweglich am Dachholm führen zu können, ist eine Führungsschiene am Dachholm vorgesehen, die in Längsrichtung des Dachholms verläuft. Die Bewegung eines Beschlags kann dadurch bewirkt werden, dass an dem Beschlag ein nach unten hängendes Band befestigt ist, welches als Handhabe dient, so dass das Band erfasst und mittels des Bandes der Beschlag entlang des Dachholms in die gewünschte Richtung gezogen werden kann. Oder es können am Beschlag Anschlussmittel vorgesehen sein, an welche eine Handhabe angeschlossen werden kann, so dass die Handhabe nicht hinderlich im Weg ist und nur im Bedarfsfall an den Beschlag angeschlossen wird. Die Anschlussmittel können beispielsweise als Öse ausgestaltet sein, in welche ein Band oder eine Stange, jeweils ggf. mit einem Haken versehen, eingehängt werden kann.

Die Führungsschiene kann vorteilhaft einen C-förmigen Profilquerschnitt aufweisen. Hierdurch wird eine verliersichere Führung des Beschlages ermöglicht, indem ein entsprechender Führungsabschnitt des Beschlages von der Führungsschiene umfasst wird. Auf diese Weise ist der Beschlag gegen Kräfte in sämtlichen Richtungen, die quer zum Dachholm bzw. zur Führungsschiene wirken, an der Führungsschiene gesichert.

Der Dachholm kann vorteilhaft als Walzprofil oder Strangpressprofil ausgestaltet sein. Die Führungsschiene kann in einem solchen Fall als integraler Bestandteil des Profilquerschnitts ausgestaltet sein. Auf diese Weise werden zusätzliche Fertigungsschritte, die für die Herstellung und die Montage der Führungsschiene erforderlich sind, erübrigt. Beispielsweise kann der Dachholm besonders vorteilhaft als Strangpressprofil aus Aluminium ausgestaltet sein, so dass sich komplizierte Profilgeometrien wirtschaftlich verwirklichen lassen und ein vergleichsweise geringes Gewicht eines Dachholms möglich ist.

Alternativ kann vorteilhaft die Führungsschiene als ein separates Bauteil ausgestaltet sein, welches an dem Dachholm befestigt ist. Eine derartig ausgestaltete Führungsschiene kann beispielsweise bei bereits vorhandenen Nutzfahrzeugen an einem dort vorhandenen Dachholm befestigt werden, so dass ein Nutzfahrzeug auch noch nachträglich mit den Vorteilen des vorliegenden Vorschlags ausgestattet werden kann.

Vorteilhaft kann der Beschlag einen Führungsabschnitt aufweisen, der in der Führungsschiene gleitbeweglich geführt ist, indem dieser Führungsabschnitt als so genannter Gleit- oder Kulissenstein ausgestaltet ist. Durch geeignete Wahl des Werkstoffs, aus dem der Beschlag hergestellt wird, oder wenn der Beschlag mit Gleitelementen aus einem entsprechenden Werkstoff versehen wird, ist eine problemlose Längsbeweglichkeit mit geringem Kraftaufwand für den Beschlag entlang der Führungsschiene möglich, so dass keine beweglichen Teile vorgesehen sind und der Beschlag besonders funktionssicher ausgestaltet sein kann. Zudem kann der Beschlag als beispielsweise Frästeil oder Spritzgussteil aus einem gleitfreudigen, reibungsarmem Werkstoff einstückig ausgestaltet sein, so dass eine preisgünstige Fertigung des Beschlags ohne die Notwendigkeit möglich ist, mehrere einzelne Bauteile zu montieren.

Alternativ dazu kann es vorteilhaft sein, den Beschlag rollbeweglich in der Führungsschiene zu führen. Hierzu kann der Beschlag einen Führungsabschnitt aufweisen, der Laufrollen aufweist. Die Laufrollen können eine besonders leichtgängige Führung des Beschlags in der Führungsschiene sicherstellen. Angesichts der im Laderaum sehr hoch angeordneten Führungsschienen ist eine Verschmutzung der Laufrollen nicht zu erwarten, so dass eine leichtgängige Beweglichkeit des Beschlages über eine lange Zeit möglich ist.

Vorteilhaft kann vorgesehen sein, dass der Dachholm unterhalb der Führungsschiene eine Stützfläche bildet, an welcher sich der Beschlag abstützt. Wenn auf den Beschlag eine nach unten gerichtete Kraft einwirkt, ist der Beschlag bestrebt, sich um eine Art Schwenklager zu drehen, welches durch den Führungsabschnitt des Beschlags in der Führungsschiene gebildet wird. Gegen diese Schwenkbewegung stützt sich der Beschlag an der Stützfläche des Dachholms ab, so dass bei der erwähnten nach unten gerichteten Bewegung, die beispielsweise mittels des Ladungssicherungselements auf den Beschlag einwirkt, diese Anpresskraft verstärkt wird, mit welcher der Beschlag an der Stützfläche anliegt. Die auf den Beschlag einwirkenden Kräfte müssen daher nicht lediglich von dem Führungsabschnitt des Beschlags aufgenommen werden, sondern werden auch auf die Fläche geleitet, mit welcher der Beschlag der Stützfläche anliegt, so dass insgesamt die Belastbarkeit des Beschlags vergrößert wird.

Zur Ausgestaltung eines vorschlagsgemäßen Nutzfahrzeugs kann vorteilhaft ein Dachholm verwendet werden, der eine Führungsschiene aufweist, welche einen Beschlag zur Halterung eines Ladungssicherungselements aufnimmt, so dass mittels der Führungsschiene die Längsbeweglichkeit dieses Beschlags ermöglicht ist.

Weiterhin kann zur Ausgestaltung eines vorschlagsgemäßen Nutzfahrzeugs vorteilhaft eine Führungsschiene vorgesehen sein, die ggf. als nachrüstbares, separates Bauteil ausgestaltet sein kann und welche einen Beschlag zur Halterung eines Ladungssicherungselements aufnimmt.

Schließlich kann zur vorschlagsgemäßen Ausgestaltung eines Nutzfahrzeugs vorteilhaft ein Beschlag vorgesehen sein, der einen gleitenden oder rollenden Führungsabschnitt aufweist, um mit diesem in der Führungsschiene an einem Dachholm längsbeweglich geführt zu werden.

Ein Ausführungsbeispiel der Erfindung wird anhand der rein schematischen Darstellungen nachfolgend näher erläutert. Dabei zeigt
- Fig. 1: einen Querschnitt durch einen eine Führungsschiene aufweisenden Dachholm, und
- Fig. 2: eine perspektivische Ansicht auf die zum Dachholm gerichtete Rückseite eines Beschlags,
- Fig. 3: eine perspektivische Ansicht auf einen Dachholm von Fig. 1 mit einem darin längsbeweglich geführten Beschlag gemäß Fig. 2.
- Fig. 4: eine perspektivische Ansicht von außen in einen Laderaum eines Nutzfahrzeugs, in dem unterschiedliche Güter gesichert sind,
- Fig. 5: einen Blick in das Innere eines leeren Laderaums, mit mehreren darin angeordneten Ladungssicherungs-Elementen,
- Fig. 6: die Handhabung eines Ladungssicherungs-Elements zum Beginn des Ladungssicherungs-Vorgangs,
- Fig. 7: dasselbe Ladungssicherungs-Element wie in Fig. 6 kurz vor Beendigung des Ladungssicherungs-Vorgangs, und
- Fig. 8: eine Ansicht ähnlich Fig. 4 während des Verstellvorgangs eines Ladungssicherungs-Elements.

In den Zeichnungen ist mit 1 jeweils insgesamt ein Dachholm bezeichnet, der als Strangpressprofil aus Aluminium hergestellt ist. Der Dachholm 1 weist in an sich bekannter Weise mehrere Abschnitte in seinem Querschnitt auf. Eine erste Führungsnut 2 dient zur Aufnahme von Rungen, die längsbeweglich am Dachholm 1 geführt sind, so dass diese Rungen zusammen mit einer seitlichen Plane zusammengeschoben oder auseinander gezogen werden können.

Eine zweite Führungsnut 3 dient zur Führung der erwähnten Plane, die beispielsweise mithilfe von Rollen, die in der zweiten Führungsnut 3 laufen, am Dachholm 1 beweglich ist.

Eine dritte Führungsnut 4 dient zur Aufnahme einer Dichtlippe, beispielsweise aus einem Elastomerwerkstoff, die als obere Abdichtung dachziegelartig die Oberkante der erwähnten Seitenplane überdeckt. Weitere Vorsprünge bzw. Kanäle sind am Umfang des Dachholms 1 in dessen oberen Bereich vorgesehen, um die Festlegung eines entweder festen oder ebenfalls durch eine Plane gebildeten Dachs zu ermöglichen.

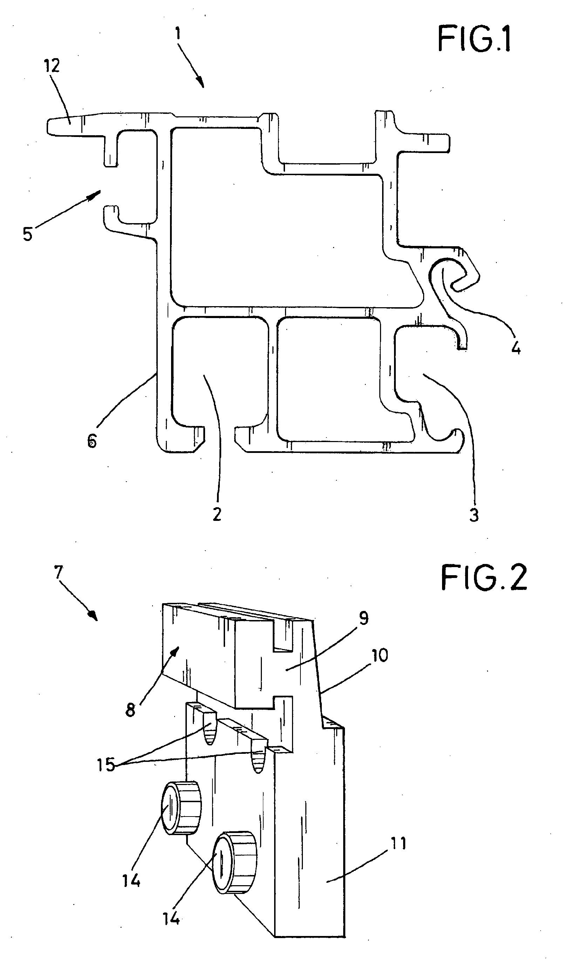

Abgesehen von dieser an sich bekannten Ausgestaltung des Dachholms 1 weist das in Fig. 1 dargestellte Ausführungsbeispiel durch eine Erweiterung der Profilgeometrie eine Führungsschiene 5 auf, die mit einem C-förmigen Profilquerschnitt versehen ist und zur Seite hin offen ist. Unterhalb der Führungsschiene 5 und gegenüber der Führungsschiene 5 zurückversetzt, bildet der Dachholm 1 eine Stützfläche 6, auf die später noch näher eingegangen wird.

Fig. 2 zeigt einen Beschlag 7 von dessen Rückseite her, also von der Seite, mit welcher dieser Beschlag 7 zum Dachholm 1 ausgerichtet ist, wenn der Beschlag 7 am Dachholm 1 in der Führungsschiene 5 geführt wird. Der Beschlag 7 weist in seinem oberen Bereich einen Führungsabschnitt 8 auf, der bei dem dargestellten Ausführungsbeispiel als Gleitstück ausgestaltet ist. Der gesamte Beschlag 7 besteht aus einem einzigen Materialblock, der beispielsweise durch Fräsen oder als Spritzgussteil hergestellt sein kann. Der Führungsabschnitt 8 taucht in die Führungsschiene 5 des Dachholms 1 ein. Über einen Verbindungssteg 9 ist der Führungsabschnitt 8 mit dem übrigen Beschlag 7 verbunden. Auf der dem Führungsabschnitt 8 gegenüberliegenden Seite des Verbindungsstegs 9 schließt eine Schrägfläche 10 an, die in einen unteren, als Beschlagblock 11 bezeichneten Abschnitt des Beschlags 7 übergeht. Durch die Schrägfläche 10 wird eine Kontur des Beschlags 7 bewirkt, die im oberen Bereich, dem Führungsabschnitt 8 gegenüberliegend, so weit zurückgenommen ist, dass sie im Nutzfahrzeug vorhandenen Störkonturen ausweicht. Beispielsweise können in diesem, dem Dachholm 1 nahen Bereich Schraubenköpfe vorgesehen sein, die der Befestigung des Dachs dienen können, wobei die entsprechenden Schrauben durch einen Profilsteg 12 verlaufen, der durch den Dachholm 1 gebildet ist und über die Führungsschiene 5 hinausragt.

Auf seiner zum Dachholm 1 gerichteten Seite weist der Beschlag 7 unterhalb des Führungsabschnitts 8, nämlich an dem Beschlagblock 11, zwei Stützzapfen 14 auf, die der bereits erwähnten Stützfläche 6 des Dachholms 1 anliegen. Durch die Stützzapfen 14 wird eine erheblich geringere Kontaktfläche zwischen dem Beschlag 7 bzw. dem Beschlagblock 11 und dem Dachholm 1 geschaffen, so dass eine möglichst leichtgängige Längsbewegung des Beschlags 7 entlang dem Dachholm 1 unterstützt wird. An Stelle der beiden dargestellten Stützzapfen 14 kann, insofern abweichend von dem dargestellten Ausführungsbeispiel, eine horizontal verlaufende Stützrippe vorgesehen sein, die sich beispielsweise über die gesamte Länge erstreckt, die durch die beiden Stützzapfen 14 und den dazwischen befindlichen Abstand definiert ist. Eine derartige Stützrippe ist robuster als die beiden dargestellten Stützzapfen 14 bewirkt jedoch ebenfalls eine deutlich verringerte Kontaktfläche zwischen dem Beschlag 7 und dem Dachholm 1.

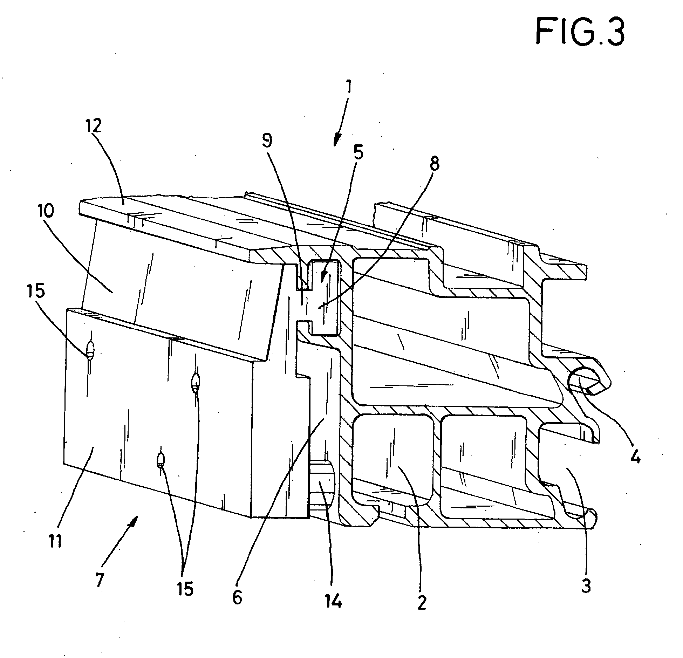

In Fig. 3 ist der Beschlag 7 am Dachholm 1 dargestellt, wobei sich der Führungsabschnitt 8 in der Führungsschiene 5 befindet. Die Stützzapfen 14 des Beschlags 7 liegen der Stützfläche 6 des Dachholms 1 an. Drei Durchgangsbohrungen 15 sind genauso angeordnet wie in den aus der Praxis bekannten, an den Dachholmen 1 der Nutzfahrzeuge fest montierten Beschlägen, so dass die Einrichtungen zur Ladungssicherung an dem dargestellten Beschlag 7 in an sich bekannter Weise befestigt werden können.

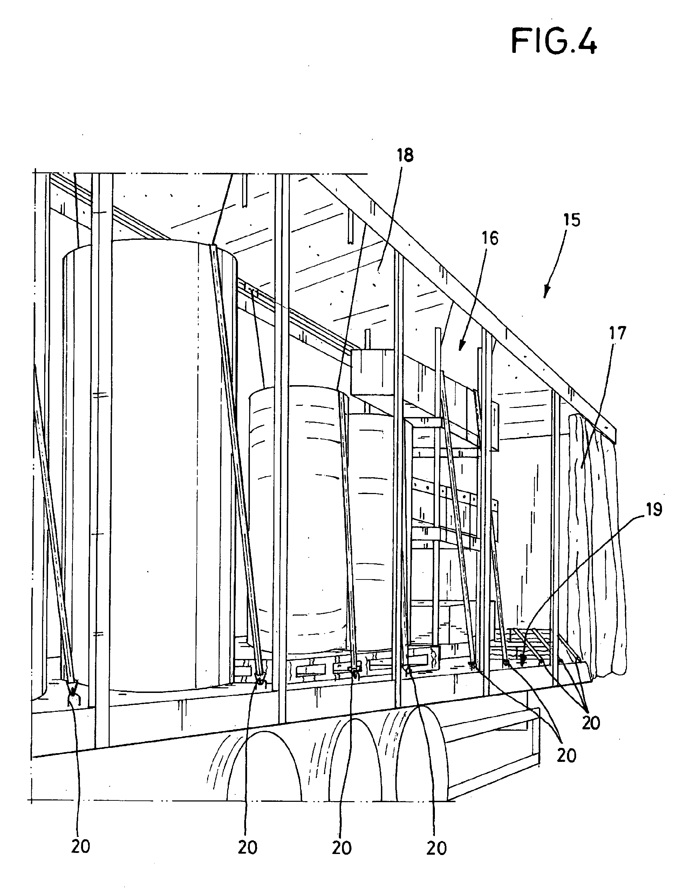

In Fig. 4 ist ein Nutzfahrzeug 15 teilweise dargestellt, wobei ein geschlossener Laderaum 16 vorgesehen ist, der seitlich durch als Planen ausgestaltete Seitenwände 17, nach oben durch ein Dach 18, nach unten durch eine Ladefläche 19 begrenzt ist.

In Längsrichtung des Laderaums 16 sind auf der Ladefläche 19 mehrere Verankerungspunkte 20 in Form von Zurrösen vorgesehen, an denen jeweils Ladungssicherungs-Elemente 21 festgelegt sind. Die Ladungssicherungs-Elemente 21 sind als Spanngurte ausgestaltet, die mit Haken versehen sind, welche in die Zurrösen eingehakt werden können.

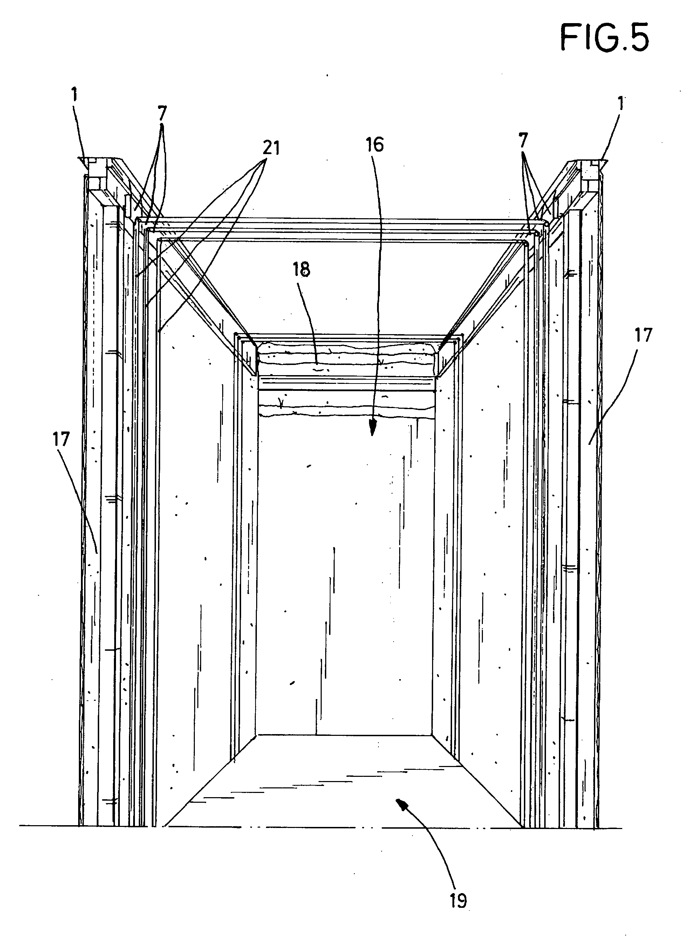

Fig. 5 zeigt einen leeren Laderaum 16. Hier ist dargestellt, dass die beiden seitlichen Planen 17 geschlossen bleiben, während das ebenfalls als Plane ausgestaltete Dach 18 nach vorn zusammengeschoben ist, um eine Beladung des Laderaums 16 von oben zu ermöglichen. Zwei Dachholme 1 sind im Übergangsbereich zwischen Seitenwand 17 und Dach 18 angeordnet und an diesen beiden Dachholmen 1 sind jeweils mehrere Beschläge 7 längsbeweglich geführt. Jeweils zwei gegenüberliegende Beschläge 7 dienen dazu, ein Ladungssicherungs-Element 21 zu führen, wobei das Ladungssicherungs-Element 21 jeweils mit seinen beiden Enden frei hängend angeordnet ist und nicht mit einem Verankerungspunkt 20 verbunden ist. In dieser Stellung der Ladungssicherungs-Elemente 21 ist nahezu der gesamte freie Innenquerschnitt des Laderaums 16 zugänglich, und umgekehrt wird aus dieser Anordnung der Ladungssicherungs-Elemente 21 ersichtlich, dass ein Ladungssicherungs-Element 21 problemlos in Längsrichtung des Laderaums 16 verschoben werden kann, auch wenn sich Ladung im Laderaum 16 befindet.

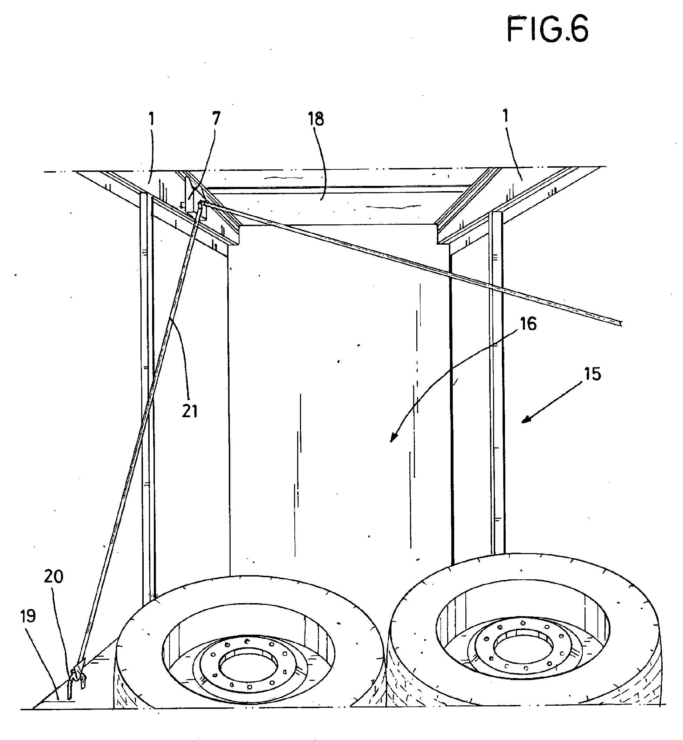

Fig. 6 zeigt in einer Blickrichtung ähnlich der von Fig. 5 ein Ladungssicherungs-Element 21, welches mit seinem in der Zeichnung links dargestellten Ende an einem Verankerungspunkt 20 bereits befestigt ist. Der Beschlag 7 am linken Dachholm 1 ist ersichtlich und im Bereich dieses Beschlags 7 ist das Ladungssicherungs-Element 21 umgelenkt. Der gegenüberliegende Beschlag 7 ist in Fig. 6 aufgrund des Bildausschnittes nicht ersichtlich. Es ist jedoch am Verlauf des Ladungssicherungs-Elements 21 ersichtlich, dass das gegenüberliegende, rechte Ende des Ladungssicherungs-Elements 21 nach unten gezogen wird, um auf diese Weise das Ladungssicherungs-Element 21 an die in Fig. 6 angedeutete Ladung, die im Vordergrund des Bildes dargestellt ist, anzulegen.

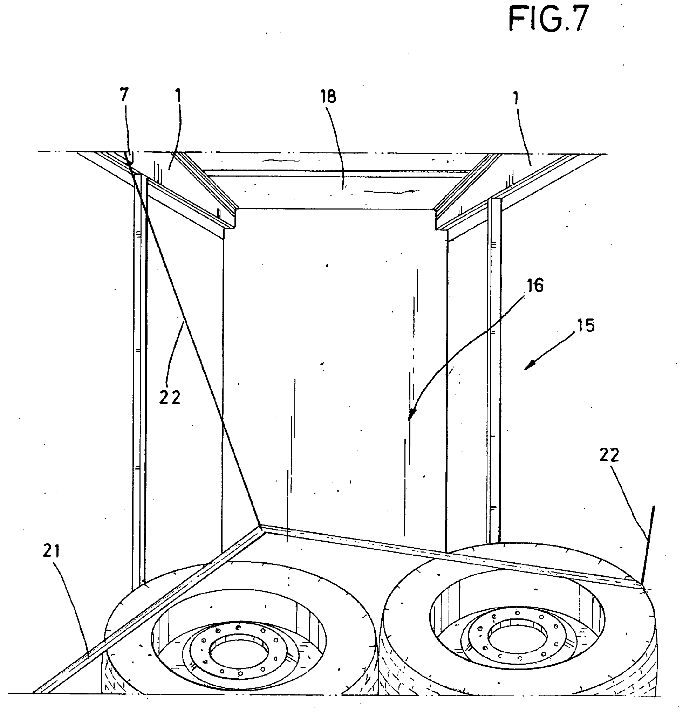

Fig. 7 zeigt das Ladungssicherungs-Element von Fig. 6 kurz vor seiner endgültigen Festlegung: Vom Ladungssicherungs-Element 21 verlaufen zwei dehnbare Zwischenelemente 22 zu den jeweiligen Beschlägen 7, und unter Dehnung dieser Zwischenelemente 22 ist der Spanngurt, nämlich das Ladungssicherungs-Element 21, schon nahezu vollständig auf die Ladung herabgezogen worden. Ein weiteres Spannen des Spanngurtes wird eine weitere Dehnung des linken Zwischenelements 22 bewirken und zur engen Anlage des Spanngurtes an der Ladung führen, so dass diese dann gesichert ist.

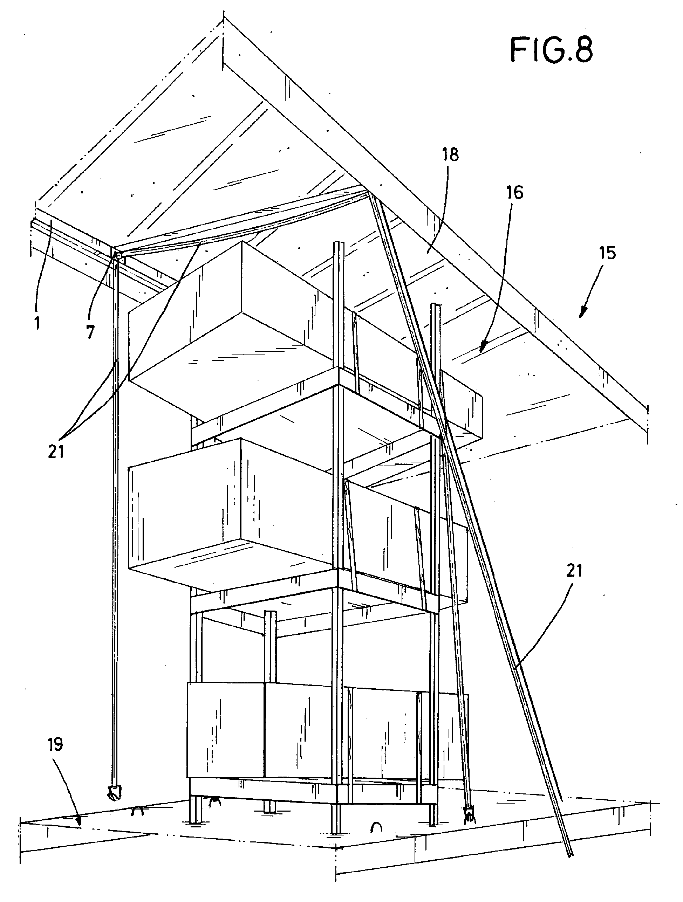

Fig. 8 zeigt eine perspektivische Ansicht von außen in einen Laderaum 16. Das Dach 18 ist geschlossen, die beiden Seitenwände jedoch sind geöffnet, indem die Planen 17, im Bild nicht ersichtlich, zusammengefaltet sind, so dass ein optimal freier Zugang zum Laderaum 16 von der Seite her ermöglicht ist. Während einige Spanngurte, nämlich einige Ladungssicherungs-Elemente 21, bereits unterschiedlichen Ladungsstücken anliegen, ist in Fig. 8 eine Situation gezeigt, in welcher ein weiteres Ladungssicherungs-Element 21 gerade verstellt wird, um eine weitere Ladung zu sichern. Der in dieser Zeichnung weiter hinten ersichtliche Abschnitt des frei herabhängenden Ladungssicherungs-Elements 21 ist bei einem Beschlag 7, der an dem Dachholm 1 geführt ist, umgelenkt. Er verläuft von dort aus nicht exakt quer zur Fahrzeuglängsachse zum gegenüberliegenden Dachholm 1, sondern vielmehr leicht schräg nach vorne zu dem dortigen Dachholm 1 und von dort nicht senkrecht herabhängend nach unten, sondern schräg nach vorn. Diese schräge Ausrichtung des Ladungssicherungs-Elements 21 soll verdeutlichen, dass ein Zug an diesem in der Zeichnung vorderen Ende auf das Ladungssicherungs-Element 21 ausgeübt wird. Diese Zugkraft weist eine Komponente auf, welche das Ladungssicherungs-Element 21 entlang dem Dachholm 1 verschiebt. Durch die Verbindung zum gegenüberliegenden Dachholm 1 wird auch der dortige Beschlag 7 in der Zugrichtung nachgeführt und entlang dem dortigen Dachholm 1 verschoben, so dass durch Handhabung des Ladungssicherungs-Elements 21 an nur einer Fahrzeugseite das Ladungssicherungs-Element 21 auf beiden Fahrzeugseiten verstellt und in die gewünschte Position gebracht werden kann.

Wie aus Fig. 8 ersichtlich, folgt dabei der vom Benutzer abgewandte Teil des Ladungssicherungs-Elements 21 mit einem gewissen Nachlauf, so dass bei der Handhabung des Spanngurts dieser so weit entlang den beiden Dachholmen 1 verschoben werden kann, bis der gegenüberliegende, vom Benutzer abgewandte Beschlag 7 in der gewünschten Stellung angekommen ist, anschließend kann der dem Benutzer zugewandte Beschlag 7 wieder geringfügig zurückgeführt werden, bis auch er die dem jenseitigen Beschlag 7 gegenüberliegende, gewünschte Stellung am Dachholm 1 annimmt. Der Benutzer kann nun das ihm zugewandte Ende des Spanngurts an einem Verankerungspunkt 20 festlegen und anschließend auf der gegenüberliegenden Fahrzeugseite das zweite, gegenüberliegende Ende des Ladungssicherungs-Elements 21 an einem dortigen Verankerungspunkt 20 festlegen.

## Patentansprüche

1. Nutzfahrzeug,
mit einem die Nutzlast aufnehmenden Laderaum,
in Längs- oder Fahrtrichtung des Nutzfahrzeugs verlaufenden Dachholmen (1), welche jeweils in dem Bereich verlaufen, in welchem ein Dach an eine Seitenwand des Laderaums angrenzt,
und mit einem an einem Dachholm (1) gehaltenen Beschlag (7) zur Halterung eines Ladungssicherungs-Elements,
wobei am Dachholm (1) eine Führungsschiene (5) vorgesehen ist, die in Längsrichtung des Dachholms (1) verläuft, der Beschlag (7) an der Führungsschiene (5) längsbeweglich geführt ist,
an beiden parallelen Dachholmen (1) jeweils ein Beschlag (7) vorgesehen ist,
beide Beschläge (7) durch einen Mitnehmer miteinander verbunden sind, derart, dass eine Längsbewegung eines Beschlags (7) mittels des Mitnehmers auf den anderen Beschlag (7) übertragen wird und beide Beschläge (7) gemeinsam beweglich sind,
wobei das an dem Beschlag jeweils gehaltene Element als dehnbares Zwischenelement ausgestaltet ist, an dem das Ladungssicherungs-Element geführt ist,
die Fahrzeugstruktur eine Mehrzahl von Verankerungspunkten aufweist, von denen an jeweils zweien das Ladungssicherungs-Element derart verankerbar ist, dass vom Ladungssicherungs-Element aufgenommene Kräfte über die Verankerungspunkte in die Fahrzeugstruktur eingeleitet werden,
und das Ladungssicherungs-Element lösbar an den Verankerungspunkten festgelegt ist.

2. Nutzfahrzeug nach Anspruch 1,
**dadurch gekennzeichnet,**
**dass** die Führungsschiene (5) einen C-förmigen Profilquerschnitt aufweist.

3. Nutzfahrzeug nach einem der vorhergehenden Ansprüche,
**dadurch gekennzeichnet,**
**dass** der Dachholm (1) als Walz- oder Strangpressprofil ausgestaltet ist und die Führungsschiene (5) als integraler Bestandteil des Profilquerschnitts ausgestaltet ist.

4. Nutzfahrzeug nach Anspruch 1 oder 2,
**dadurch gekennzeichnet,**
**dass** die Führungsschiene (5) als separates Bauteil ausgestaltet und an dem Dachholm (1) befestigt ist.

5. Nutzfahrzeug nach einem der vorhergehenden Ansprüche,
**dadurch gekennzeichnet,**
**dass** der Beschlag (7) einen Führungsabschnitt (8) aufweist, der als Gleitstein ausgestaltet und in der Führungsschiene (5) gleitbeweglich geführt ist.

6. Nutzfahrzeug nach einem der Ansprüche 1 bis 5,
**dadurch gekennzeichnet,**
**dass** der Beschlag (7) einen Führungsabschnitt (8) aufweist, der mittels Laufrollen in der Führungsschiene (5) beweglich geführt ist.

7. Nutzfahrzeug nach einem der vorhergehenden Ansprüche,
**dadurch gekennzeichnet,**
**dass** der Dachholm (1) unterhalb der Führungsschiene (5) eine Stützfläche (6) bildet, an welcher sich der Beschlag (7) abstützt,
derart, dass eine nach unten gerichtete, auf den Beschlag (7) einwirkende Kraft eine Verstärkung der Anpresskraft bewirkt, mit welcher der Beschlag (7) der Stützfläche (6) anliegt.

8. Dachholm (1) eines nach einem der vorhergehenden Ansprüche ausgestalteten Nutzfahrzeugs,
wobei der Dachholm (1) eine Führungsschiene (5) aufweist, welche einen Beschlag (7) zur Halterung eines Ladungssicherungs-Elements aufnimmt.

9. Führungsschiene (5) eines nach einem der Ansprüche 1 bis 7 ausgestalteten Nutzfahrzeugs,
wobei die Führungsschiene (5) einen Beschlag (7) zur Halterung eines Ladungssicherungs-Elements aufnimmt.

10. Beschlag (7) eines nach einem der Ansprüche 1 bis 7 ausgestalteten Nutzfahrzeugs, wobei der Beschlag (7) einen gleitenden oder rollenden Führungsabschnitt (8) aufweist, der in einer Führungsschiene (5) eines Dachholms (1) aufnehmbar ist.
